# EUROPEAN PATENT APPLICATION

(11) **EP 3 611 843 A1**
(43) Date of publication of application: **19.02.2020**
(21) Application number: 18784520.1
(22) Date of filing: 30.03.2018
(51) Int. Cl.: H04B 1/59, G06K 7/10, G06K 19/07, H04B 5/02

(54) **CONTACTLESS COMMUNICATION DEVICE AND COMMUNICATION SYSTEM**

(30) Priority: 14.04.2017 JP 2017080288
(71) Applicant: Sony Corporation, Tokyo 108-0075 (JP)
(72) Inventor: TAKAYAMA Yoshihisa, Tokyo 108-0075 (JP)
(74) Representative: D Young & Co LLP
(86) International application number: PCT/JP2018/013632
(87) International publication number: WO 2018/190153

(57) **Abstract**

The present technology relates to a contactless communication device and communication system capable of achieving further reduction of communication processing time.

A reader/writer includes a controller that transmits an advanced message specifying a processing target and a processing content as parameters to a contactless IC card on the other side by contactless communication, and causes a contactless IC card to execute the processing content using data as the processing target. The contactless IC card includes a controller that receives an advanced message specifying a processing target and a processing content as parameters from the reader/writer on the other side by contactless communication, and executes the processing content using data as the processing target. The present technology can be applied to a contactless communication system or the like that performs contactless communication, for example.

## Description

### TECHNICAL FIELD

The present technology relates to a contactless communication device and communication system, and more particularly to a contactless communication device and communication system capable of achieving further reduction of communication processing time.

### BACKGROUND ART

Contactless integrated circuit (IC) cards that communicate in a contactless manner are in widespread use. A contactless IC card is used in various applications such as an electronic money card, a commuter pass for transportation, a card for entering and leaving a room, a credit card for a financial institution, and the like.

A contactless IC card executes a series of processing by repeating primitive commands and responses such as reading and writing of predetermined information with the reader/writer multiple times (see Patent Document 1, for example).

### CITATION LIST

### PATENT DOCUMENT

Patent Document 1: Japanese Patent Application Laid-Open No. 2007-329884

### SUMMARY OF THE INVENTION

### PROBLEMS TO BE SOLVED BY THE INVENTION

For example, in a case where a series of communication processing for exchanging predetermined information is completed by repeating five commands and responses, if the contactless IC card goes out of the communication range of a reader/writer during processing of a third command, incomplete processing occurs in which the series of communication processing is not completed. For this reason, in order to reduce occurrence of incomplete processing, completion of a series of communication processing in a shorter time is expected.

The present technology has been made in view of such a situation, and is aimed to achieve further reduction of communication processing time.

### SOLUTIONS TO PROBLEMS

A contactless communication device of a first aspect of the present technology includes a controller that transmits an advanced message specifying a processing target and a processing content as parameters to a communication device on another side by contactless communication, and causes the communication device to execute the processing content using data as the processing target.

In the first aspect of the present technology, an advanced message specifying a processing target and a processing content as parameters is transmitted to a communication device on the other side by contactless communication, and the communication device executes the processing content using data as the processing target.

A contactless communication device of a second aspect of the present technology includes a controller that receives an advanced message specifying a processing target and a processing content as parameters from a communication device on another side by contactless communication, and executes the processing content using data as the processing target.

In the second aspect of the present technology, an advanced message specifying a processing target and a processing content as parameters is received from a communication device on the other side by contactless communication, and the processing content is executed using data as the processing target.

A communication system according to a third aspect of the present technology includes a first communication device and a second communication device that perform contactless communication, the first communication device including a controller that transmits an advanced message specifying a processing target and a processing content as parameters to the second communication device, and causes the second communication device to execute the processing content using data as the processing target, and the second communication device including a controller that receives the advanced message from the first communication device, and executes the processing content using data as the processing target.

In the third aspect of the present technology, in the first communication device, an advanced message specifying a processing target and a processing content as parameters is transmitted to the second communication device, while in the second communication device, the advanced message is received from the first communication device and the processing content is executed using data as the processing target.

Contactless communication refers to communication in a contactless manner that becomes possible when the distance between communicating devices is within several tens of centimeters, and also includes a state in which (housing of) the communicating devices are in contact with each other.

The contactless communication device may be an independent device, or may be an internal block included in one device.

### EFFECTS OF THE INVENTION

According to the first to third aspects of the present technology, the communication processing time can be further reduced.

Note that the effect described herein is not necessarily limited, and may be any effect described in the present disclosure.

### BRIEF DESCRIPTION OF DRAWINGS

Fig. 1 is a block diagram showing a configuration of an embodiment of a contactless communication system to which the present technology is applied.
Fig. 2 is a diagram for describing the outline of an attraction room.
Fig. 3 is a diagram for describing scenarios in a case where an attraction room is latched once.
Fig. 4 is a diagram for describing scenarios in a case where attraction rooms are latched twice.
Fig. 5 is a diagram for describing scenarios in a case where attraction rooms are latched three times.
Fig. 6 is a flowchart showing entrance management processing at the time of entrance using primitive commands.
Fig. 7 is a flowchart showing exit management processing at the time of exit using primitive commands.
Fig. 8 is a flowchart showing entrance management processing at the time of entrance using advanced messages.
Fig. 9 is a flowchart showing exit management processing at the time of exit using advanced messages.
Fig. 10 is a diagram for describing another form of the attraction room.
Fig. 11 is a control block diagram of contactless communication processing.
Fig. 12 is a block diagram showing another configuration example of the contactless communication system.

### MODE FOR CARRYING OUT THE INVENTION

Hereinafter, a mode for carrying out the present technology (hereinafter referred to as embodiment) will be described. Note that the description will be given in the following order.
1. Configuration example of contactless communication system
2. Service application example
3. Entrance management processing at time of entrance using primitive command
4. Exit management processing at time of exit using primitive command
5. Entrance management processing at time of entrance using advanced message
6. Exit management processing at time of exit using advanced message
7. Comparison of primitive command and advanced message
8. Control block diagram of contactless communication processing
9. Other configuration example of contactless communication system

### <1. Configuration example of contactless communication system>

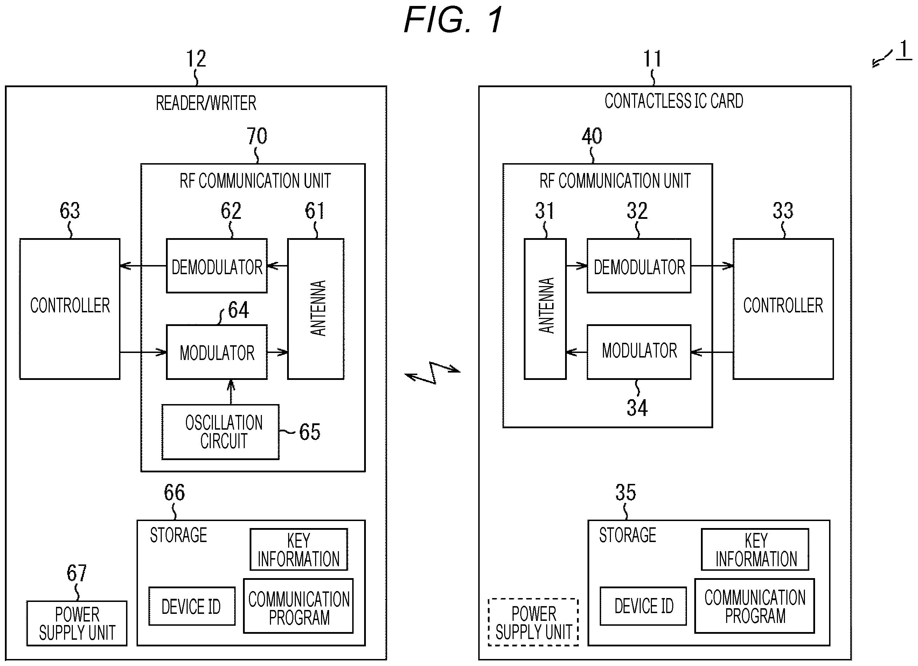

Fig. 1 is a block diagram showing a configuration of an embodiment of a contactless communication system to which the present technology is applied.

The contactless communication system 1 of Fig. 1 includes a contactless IC card 11 and a reader/writer 12. Data is exchanged in a contactless manner using radio waves (electromagnetic waves) between the contactless IC card 11 and the reader/writer 12.

The contactless IC card 11 incorporates, for example, a contactless IC chip, an antenna, and the like, and performs contactless near-field communication with the reader/writer 12. The contactless IC card 11 executes various processing according to a command received from the reader/writer 12.

The reader/writer 12 emits electromagnetic waves, and performs processing such as polling or the like to detect the contactless IC card 11. When the contactless IC card 11 is detected, the reader/writer 12 exchanges data with the detected contactless IC card 11 as needed.

The contactless IC card 11 has an antenna 31, a demodulator 32, a controller 33, a modulator 34, and a storage 35. The antenna 31, the demodulator 32, and the modulator 34 form an RF communication unit 40.

The contactless IC card 11 does not have a power source such as a battery, but operates by generating DC power on the basis of the alternating current electromotive force generated in the antenna 31 and supplying the generated DC power to each part of the contactless IC card 11. Note that the contactless IC card 11 may include a power supply unit and be configured to supply power to each part from the power supply unit of its own.

The antenna 31 includes a loop antenna, for example, and receives the modulated signal transmitted from the reader/writer 12, and supplies the modulated signal to the demodulator 32.

The demodulator 32 demodulates the modulated signal supplied from the antenna 31 by a demodulation scheme corresponding to a modulation scheme of the reader/writer 12, and supplies data obtained as a result of the demodulation to the controller 33. For example, the demodulator 32 demodulates an ASK modulated signal received through the antenna 31, and outputs data obtained by the demodulation to the controller 33.

The controller 33 controls contactless communication with the reader/writer 12 in accordance with a communication program read from the storage 35. Specifically, the controller 33 decodes the data (including command) supplied from the demodulator 32 according to a predetermined scheme, and executes predetermined processing on the basis of the decoded data. Additionally, the controller 33 encodes the data to be transmitted to the reader/writer 12 according to a predetermined encoding scheme on the basis of the processing result, and supplies the encoded data to the modulator 34. Here, Manchester encoding is adopted as the encoding scheme, for example.

The modulator 34 changes the impedance when looking at the antenna 31 from the outside according to the data supplied from the controller 33. In a case where the radio frequency (RF) field (magnetic field) is formed around the antenna 31 by the electromagnetic waves output by the reader/writer 12 as the carrier wave, change in the impedance when looking at the coil as the antenna 31 also changes the RF field around the antenna 31. As a result, the carrier wave as electromagnetic waves output from the reader/writer 12 is modulated (e.g., load modulation) according to the data supplied from the controller 33, and the modulated signal is received by the reader/writer 12.

The storage 35 stores cryptographic key information required to perform secure communication with the reader/writer 12, a device ID which is identification information for uniquely identifying itself, and the like. Additionally, the storage 35 stores a communication program for performing near-field contactless communication with the reader/writer 12, and supplies the communication program to the controller 33 as needed. The communication program also includes a mutual authentication algorithm, a decryption algorithm, and the like. Note that in a case where it is not necessary to perform encrypted communication, the cryptographic key information, the decryption algorithm, and the like may be omitted.

Additionally, the storage 35 also stores an operating system (OS) that executes basic processing such as input/output of data, generation of files, and setting/management of access rights, an application program for receiving an order (command) from an external device such as the reader/writer 12 and executing a predetermined service, and the like.

The controller 33 includes an arithmetic processing unit such as a micro processing unit (MPU) and a central processing unit (CPU), for example. The storage 35 includes a non-volatile memory such as a flash memory and an electrically erasable and programmable read only memory (EEPROM), for example.

The reader/writer 12 includes an antenna 61, a demodulator 62, a controller 63, a modulator 64, an oscillation circuit 65, a storage 66, and a power supply unit 67. The antenna 61, the demodulator 62, the modulator 64, and the oscillation circuit 65 form an RF communication unit 70.

The antenna 61 includes a loop antenna, for example, and transmits the modulated signal or the non-modulated signal supplied from the modulator 64 as electromagnetic waves. Additionally, the antenna 61 receives the modulated signal as electromagnetic waves transmitted from the contactless IC card 11, and supplies the modulated signal to the demodulator 62.

The demodulator 62 demodulates the modulated signal supplied from the antenna 61 by a demodulation scheme corresponding to the modulation scheme of the modulator 34 of the contactless IC card 11, and supplies data obtained as a result of the demodulation to the controller 63. For example, the demodulator 62 demodulates an amplitude shift keying (ASK) modulated signal acquired through the antenna 61, and outputs data obtained by the demodulation to the controller 63.

The controller 63 controls contactless communication with the contactless IC card 11 in accordance with a communication program read from storage 66. Specifically, the controller 63 encodes data such as a predetermined command according to a predetermined scheme, and outputs the encoded data to the modulator 64. Additionally, the controller 63 decodes the data supplied from the demodulator 62 according to a scheme corresponding to the encoding scheme of the data, and executes predetermined processing on the basis of the decoded data. Here, as in the case of the contactless IC card 11, Manchester encoding is adopted as the encoding scheme, for example.

The modulator 64 modulates the carrier wave supplied from the oscillation circuit 65 with data such as a command supplied from the controller 63 according to a predetermined scheme to obtain a modulated signal, and supplies the modulated signal to the antenna 61. For example, the modulator 64 ASK modulates the carrier wave, for example, on the basis of the data supplied from the controller 63.

More specifically, the modulator 64 ASK modulates the carrier wave using the sine wave of a predetermined frequency supplied from the oscillation circuit 65 as the carrier wave, with the data supplied from the controller 63, and outputs the modulated wave obtained as a result from the antenna 61 as electromagnetic waves, for example.

The oscillation circuit 65 generates a carrier wave of a predetermined frequency, and supplies the carrier wave to the modulator 64.

The storage 66 stores cryptographic key information required to perform secure communication with the contactless IC card 11, a device ID which is identification information for uniquely identifying itself, and the like. Additionally, the storage 66 stores a communication program for performing near-field contactless communication with the contactless IC card 11, and supplies the communication program to the controller 63 as needed. The communication program also includes a mutual authentication algorithm, a decryption algorithm, and the like. Note that in a case where it is not necessary to perform encrypted communication, the cryptographic key information, the decryption algorithm, and the like may be omitted.

Additionally, the storage 66 also stores an operating system (OS) that executes basic processing such as input/output of data, generation of files, and setting/management of access rights, an application program for executing a predetermined service by using information stored in the contactless IC card 11, and the like.

The power supply unit 67 includes a battery or the like, for example, and supplies necessary power to each part of the reader/writer 12.

In the contactless communication system 1 configured as described above, the storage 35 of the contactless IC card 11 stores service information corresponding to services that can be provided to the user by the contactless IC card 11.

For example, in a case where the service that can be provided to the user is an electronic money service, service information corresponding to the electronic money service is stored in the storage 35.

For example, in a case where the service that can be provided to the user is a transportation commuter pass service, service information corresponding to the transportation commuter pass service is stored in the storage 35.

For example, in a case where the service that can be provided to the user is a room entrance/exit management service, service information corresponding to the room entrance/exit management service is stored in the storage 35.

The reader/writer 12 acquires service information held by the contactless IC card 11, and orders the contactless IC card 11 to execute processing for providing a predetermined service according to the acquired service information.

The contactless IC card 11 and the reader/writer 12 can perform contactless communication using a primitive command for executing simple processing such as a WRITE command for writing predetermined data and a READ command for reading data. Additionally, the contactless IC card 11 and the reader/writer 12 can also perform contactless communication using an advanced message that causes advanced processing according to a certain rule.

Primitive commands are generally used in ISO/IEC 14443, which is a standard of proximity IC card systems, ISO/IEC 18092, which is a standard of near field communication interface and protocol (NFCIP) -1, and the like. In other words, the contactless IC card 11 and the reader/writer 12 are communication devices capable of performing contactless communication conforming to ISO/IEC 14443 and ISO/IEC 18092.

Examples of primitive commands include READ_REQ (PARA1), READ_RES (PARA2), WRITE_REQ (PARA3), and WRITE_RES (PARA4).

READ_REQ (PARA1) is a command for reading predetermined data transmitted from the reader/writer 12 to the contactless IC card 11. The parameter PARA1 as an argument stores a name of the parameter to be read or an address indicating the storage location of the parameter to be read.

READ_RES (PARA2) is a command (answer) transmitted (returned) from the contactless IC card 11 to the reader/writer 12 in response to READ_REQ (PARA1). The parameter PARA2 as an argument stores a processing result indicating success or failure of the requested read processing. In a case where the processing is successful, the requested data itself may be stored. In a case where the requested data does not exist or reading fails, data (flag) indicating failure is stored.

WRITE_REQ (PARA3) is a command for writing predetermined data transmitted from the reader/writer 12 to the contactless IC card 11. The parameter PARA3 as an argument stores data to be written.

WRITE_RES (PARA4) is a command (answer) transmitted (returned) from the contactless IC card 11 to the reader/writer 12 in response to WRITE_REQ (PARA3). The parameter PARA4 as an argument stores a processing result indicating success or failure of the requested write processing.

On the other hand, advanced messages that can be exchanged between the contactless IC card 11 and the reader/writer 12 include REQ_MESSAGE (processing condition; processing target; processing content), RES_MESSAGE (success or failure),and the like.

REQ_MESSAGE (processing condition; processing target; processing content) is a command (request) transmitted from the reader/writer 12 to the contactless IC card 11. A predetermined processing condition, a processing target, and a processing content are specified as parameters (arguments) to be passed from the reader/writer 12 to the contactless IC card 11.

By transmitting REQ_MESSAGE (processing condition; processing target; processing content), the reader/writer 12 uses the data as the processing target specified as the parameter to, in a case where the specified processing condition is satisfied, cause the contactless IC card 11 to execute the specified processing content. In a case where the specified processing condition is satisfied, the contactless IC card 11 executes the specified processing content using the specified data.

In REQ_MESSAGE (processing condition; processing target; processing content), the processing condition, the processing target, and the processing content specified as parameters are arranged in an order according to the word order of a natural language.

For example, in a case where A > B holds, a case will be described in which processing of setting (storing) data DATA_X and DATA_Y in the contactless IC card 11 is executed. In a case where an advanced message is set to follow the word order of Japanese as a natural language, REQ_MESSAGE is written as follows.
REQ_MESSAGE (A > B; DATA_X, DATA_Y; write)

If the parameters separated by ";" in this REQ_MESSAGE are supplemented with Japanese particles, REQ_MESSAGE is expressed as "Jyouken A> B ga naritatsu baainiwa deta "DATA_X" to "DATA_Y" wo kakikominasai", where the parameters are arranged in accordance with the Japanese word order.

For example, in a case where an advanced message having a similar meaning is defined to follow the English word order, REQ_MESSAGE is written as follows.
REQ_MESSAGE (A > B; write; DATA_X, DATA_Y)

If this REQ_MESSAGE is supplemented to form an English sentence, REQ_MESSAGE is expressed as "If A > B, write DATA_X and DATA_Y." where the parameters are arranged in accordance with the English word order.

The natural language in which to write the advanced message may be set by storing the type of natural language in the storage 35 or the storage 66 as setting information, for example. Natural language settings can be appropriately changed and used depending on the design and development environment of the system, the operation environment of the system, and the user of the system.

For example, REQ_MESSAGE can also specify two or more contents and targets of processing to be executed according to a condition, such as REQ_MESSAGE (processing condition; processing target 1; processing content 1; processing target 2; processing content 2). That is, the reader/writer 12 causes the contactless IC card 11 to execute the specified processing content for each of the plurality of processing targets by the advanced message specifying the plurality of processing targets and processing contents. The contactless IC card 11 executes the specified processing content for each of the plurality of processing targets. Additionally, different processing can be performed according to a condition using "if then else" which is a general function in a programming language.

Moreover, REQ_MESSAGE can omit the condition as in REQ_MESSAGE (processing target; processing content), and specify only the content and target of the processing. Specifically, if REQ_MESSAGE (DATA_X; add) is set, it is possible to specify (order) processing of adding DATA_X to a predetermined value (data) held by the contactless IC card 11.

Additionally, REQ_MESSAGE can also give a simple order of reading a value held by the contactless IC card 11 as similar to the case of READ_REQ (PARA1), by specifying only data (basic value) such as REQ_MESSAGE (processing target), for example.

RES_MESSAGE (success or failure) is a command (response) transmitted (returned) from the contactless IC card 11 to the reader/writer 12. Data indicating the processing result of success or failure is specified as a parameter. RES_MESSAGE returns the success or failure of the entire processing instructed by REQ_MESSAGE.

In a case where two or more processing is specified, the processing instructed by REQ_MESSAGE is meaningful processing only after all of the processing succeeds. If the processing fails, the contactless IC card 11 maintains the state before executing the processing instructed by REQ_MESSAGE regardless of where or what failure occurs.

### <2. Service application example>

Next, assuming that the service provided by the contactless IC card 11 is an entrance/exit management service that manages entrance/exit of an attraction room, two types of methods including a method using primitive commands and a method using advanced messages will be described.

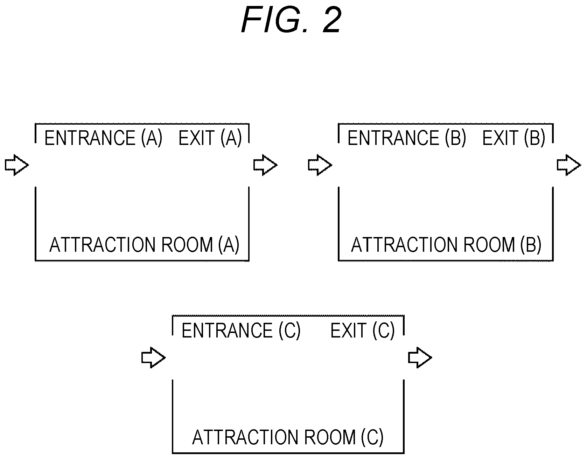

Fig. 2 shows an overview of attraction rooms managed by the entrance/exit management service.

As shown in Fig. 2, there are three attraction rooms A, B, and C as attraction rooms, and in order to use an attraction, the user must enter from the entrance of an attraction room, and afterward, must leave the exit.

The reader/writer 12 is installed at the entrance and exit of each attraction room, and when the user enters or leaves, the contactless IC card 11 is brought close to the reader/writer 12 to perform contactless communication (proximity communication). As a result, the user's entrance and exit to and from the attraction room is managed.

Note that passing through an attraction room using the entrance and the exit will be referred to as a latch.

Assume a scene that the user latches the three attraction rooms once, twice, three times,..., n times.

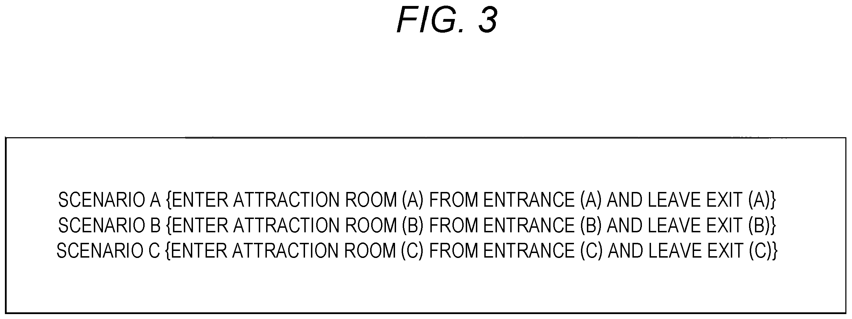

In a case where the user latches an attraction room once, there are three possible scenarios, scenario A, scenario B, and scenario C, as shown in Fig. 3.

The number of scenarios increases with increase in the number of latches assumed in a scene.

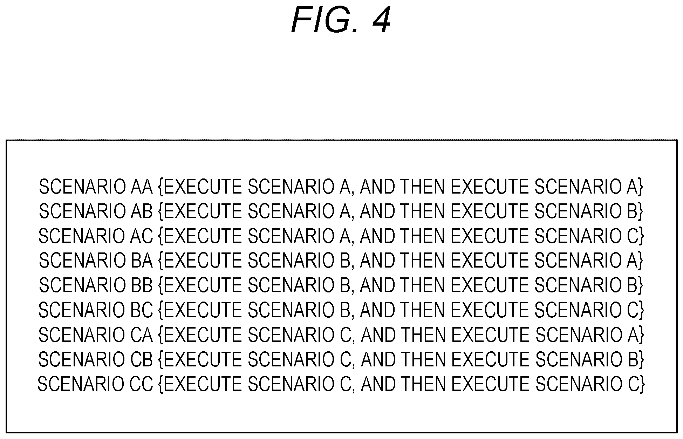

In a case where the user latches attraction rooms twice, there are nine possible scenarios, scenario AA, scenario AB, scenario AC, scenario BA, scenario BB, scenario BC, scenario CA, scenario CB, and scenario CC, as shown in Fig. 4.

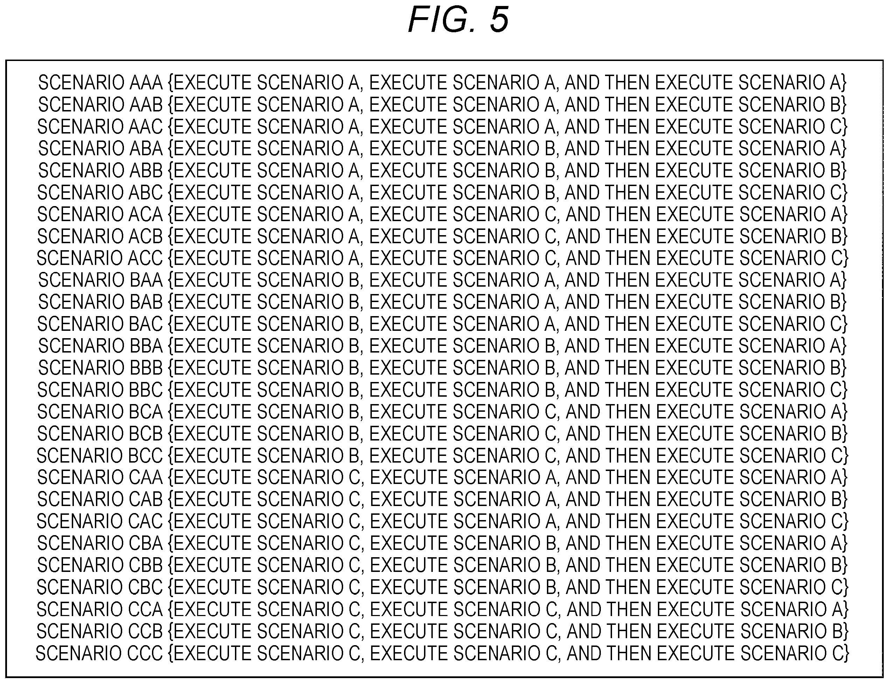

In a case where the user latches attraction rooms three times, there are 27 possible scenarios as shown in Fig. 5.

For various latches in such scenarios, the reader/writer 12 detects the user's entrance/exit (latch) to and from the attraction room, and collects the charge stored in the contactless IC card 11. The contactless IC card 11 stores a stored value (SV) corresponding to a currency (which may be electronic money or virtual currency) for paying a fee. The SV is stored in the form of a file in the storage 35 of the contactless IC card 11.

Additionally, the storage 35 of the contactless IC card 11 also stores the maximum number of times the attraction room provider allows the user to latch (hereinafter referred to as maximum allowable number of latches), in the form of a file. Note that the SV stored in the storage 35 is assumed to be a value necessary and sufficient for using the attraction room.

### <3. Entrance management processing at time of entrance using primitive command>

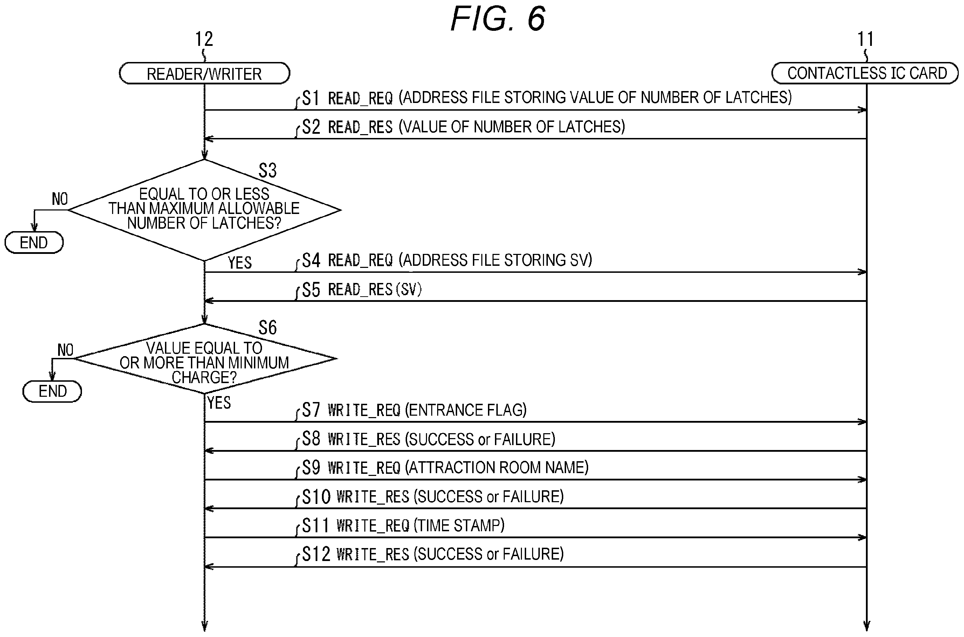

Fig. 6 is a flowchart showing entrance management processing in the case of using primitive commands, which is executed when a user enters a predetermined attraction room (A, B, C). This processing is started when the user brings the contactless IC card 11 close to the reader/writer 12 installed at the entrance of an attraction room, for example.

First, in step S1, the reader/writer 12 addresses the file storing the value of the number of latches and transmits READ_REQ, which is a command for reading the number of latches, to the contactless IC card 11.

In step S2, in response to the read command of the number of latches in step S1, the contactless IC card 11 transmits READ_RES, which is a reply command using the value of the number of latches stored in the storage 35 as an argument, to the reader/writer 12.

In step S3, the reader/writer 12 determines whether the number of latches acquired from the contactless IC card 11 is equal to or less than the maximum allowable number of latches. If it is determined in step S3 that the acquired number of latches is not equal to or less than the maximum allowable number of latches (greater than maximum allowable number of latches), the reader/writer 12 does not proceed to the processing in and after step S4, and executes predetermined exception processing to end the entrance management processing. In the embodiment, the description of exception processing is omitted.

On the other hand, if it is determined in step S3 that the acquired number of latches is equal to or less than the maximum allowable number of latches, the processing proceeds to step S4, and the reader/writer 12 addresses the file storing the SV to transmit READ_REQ, which is a read command, to the contactless IC card 11.

In step S5, in response to the read command of the SV in step S4, the contactless IC card 11 transmits READ_RES, which is a reply command using the SV stored in the storage 35 as an argument, to the reader/writer 12.

In step S6, the reader/writer 12 determines whether the SV acquired from the contactless IC card 11 is a value equal to or more than the minimum charge. If it is determined in step S6 that the acquired SV is not a value equal to or more than the minimum charge, the reader/writer 12 does not proceed to the processing in and after step S7, and executes predetermined exception processing to end the entrance management processing.

On the other hand, if it is determined in step S6 that the acquired SV is a value equal to or more than the minimum charge, the processing proceeds to step S7, and the reader/writer 12 transmits WRITE_REQ, which is a write command specifying an entrance flag indicating entrance as an argument, to the contactless IC card 11.

In step S8, in response to the write command of the entrance flag in step S7, the contactless IC card 11 executes processing of storing the entrance flag in the storage 35, and transmits WRITE_RES, which is a reply command storing data representing the processing result, to the reader/writer 12. The processing result is either success or failure, and in the embodiment, it is assumed that the write processing is successful.

In step S9, the reader/writer 12 transmits WRITE_REQ, which is a write command specifying a room name of the attraction room, that is, one of A, B, or C, as an argument, to the contactless IC card 11.

In step S10, in response to the write command of the room name of the attraction room in step S9, the contactless IC card 11 executes processing of storing the room name in the storage 35, and transmits WRITE_RES, which is a reply command storing data representing the processing result, to the reader/writer 12. The processing result is either success or failure, and in the embodiment, it is assumed that the write processing is successful.

In step S11, the reader/writer 12 transmits WRITE_REQ, which is a write command specifying a time stamp as information indicating the current time as an argument, to the contactless IC card 11.

In step S12, in response to the write command of the time stamp in step S11, the contactless IC card 11 executes processing of storing the time stamp in the storage 35, and transmits WRITE_RES, which is a reply command storing data representing the processing result, to the reader/writer 12. The processing result is either success or failure, and in the embodiment, it is assumed that the write processing is successful.

When all the above processing is completed, the entrance management processing is ended. At the end of the entrance management processing, the storage 35 of the contactless IC card 11 stores the entrance flag indicating that the user has entered, the room name of the attraction room in which the user entered, and the time stamp indicating the time of entrance. The entrance flag, the room name, and the time stamp are stored in the form of a file at a predetermined address defined in advance.

When the entrance management processing is successful and the processing ends, an entrance gate of the attraction room is opened and the user is allowed to enter.

### <4. Exit management processing at time of exit using primitive command>

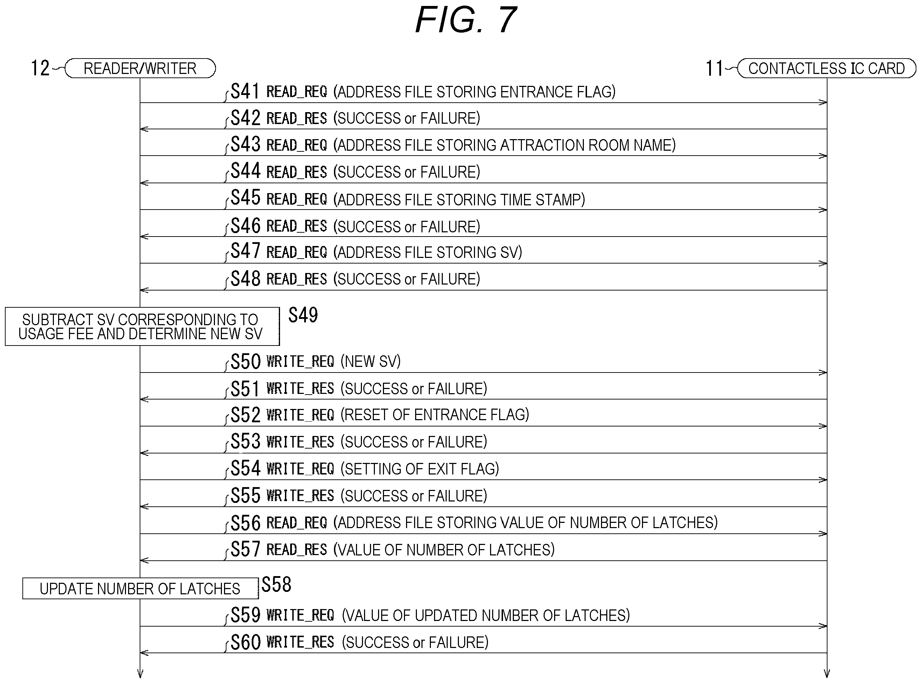

Fig. 7 is a flowchart showing exit management processing in the case of using primitive commands, which is executed when the user exits a predetermined attraction room (A, B, C). This processing is started when the user brings the contactless IC card 11 close to the reader/writer 12 installed at the exit of an attraction room, for example.

First, in step S41, the reader/writer 12 addresses the file storing the entrance flag and transmits READ_REQ, which is a command for reading the entrance flag, to the contactless IC card 11.

In step S42, in response to the read command of the entrance flag in step S41, the contactless IC card 11 transmits READ_RES, which is a reply command storing data representing the processing result, to the reader/writer 12. The processing result is either success or failure, and in the case of success, the state of the entrance flag (entrance flag ON or entrance flag OFF) is returned to the reader/writer 12. In the embodiment, it is assumed that the read processing is successful.

In step S43, the reader/writer 12 addresses the file storing the room name of the attraction room, and transmits READ_REQ, which is a command for reading the room name, to the contactless IC card 11.

In step S44, in response to the read command of the room name in step S43, the contactless IC card 11 transmits READ_RES, which is a reply command storing data representing the processing result, to the reader/writer 12. The processing result is either success or failure, and in the case of success, the entered room name (A, B or C) is returned to the reader/writer 12. In the embodiment, it is assumed that the read processing is successful.

In step S45, the reader/writer 12 addresses the file storing the time stamp, and transmits READ_REQ, which is a command for reading the time stamp, to the contactless IC card 11.

In step S46, in response to the read command of the time stamp in step S45, the contactless IC card 11 transmits READ_RES, which is a reply command storing data representing the processing result, to the reader/writer 12. The processing result is either success or failure, and in the case of success, a time stamp is returned to the reader/writer 12. In the embodiment, it is assumed that the read processing is successful.

In step S47, the reader/writer 12 addresses the file storing the SV, and transmits READ_REQ, which is a command for reading the SV, to the contactless IC card 11.

In step S48, in response to the read command of the SV in step S47, the contactless IC card 11 transmits READ_RES, which is a reply command storing data representing the processing result, to the reader/writer 12. The processing result is either success or failure, and in the case of success, the SV is returned to the reader/writer 12. In the embodiment, it is assumed that the read processing is successful.

In step S49, the reader/writer 12 subtracts the SV corresponding to the usage fee of one latch from the SV acquired from the contactless IC card 11, and determines an updated SV (hereinafter referred to as new SV).

In step S50, the reader/writer 12 transmits WRITE_REQ, which is a write command specifying the new SV as an argument, to the contactless IC card 11.

In step S51, in response to the write command of the new SV in step S50, the contactless IC card 11 executes processing of storing the new SV in the storage 35, and transmits WRITE_RES, which is a reply command storing data representing the processing result, to the reader/writer 12. The processing result is either success or failure, and in the embodiment, it is assumed that the write processing is successful.

In step S52, the reader/writer 12 transmits WRITE_REQ, which is a write command specifying reset of the entrance flag as an argument, to the contactless IC card 11.

In step S53, in response to the write command of the entrance flag reset in step S52, the contactless IC card 11 resets the entrance flag stored in the storage 35, and transmits WRITE_RES, which is a reply command storing data representing the processing result, to the reader/writer 12. The processing result is either success or failure, and in the embodiment, it is assumed that the write processing is successful.

In step S54, the reader/writer 12 sends WRITE_REQ, which is a write command specifying setting of an exit flag as an argument, to the contactless IC card 11.

In step S55, in response to the write command of the exit flag set in step S54, the contactless IC card 11 stores the exit flag in the storage 35, and transmits WRITE_RES, which is a reply command storing data representing the processing result, to the reader/writer 12. The processing result is either success or failure, and in the embodiment, it is assumed that the write processing is successful.

In step S56, the reader/writer 12 addresses the file storing the value of the number of latches, and transmits WRITE_REQ, which is a write command, to the contactless IC card 11.

In step S57, in response to the read command of the number of latches in step S56, the contactless IC card 11 transmits READ_RES, which is a reply command using the value of the number of latches as an argument, to the reader/writer 12.

In step S58, the reader/writer 12 updates the number of latches by adding 1 to the acquired number of latches.

In step S59, the reader/writer 12 transmits WRITE_REQ, which is a write command specifying the value of the updated number of latches as an argument, to the contactless IC card 11.

In step S60, in response to the write command of the number of latches in step S59, the contactless IC card 11 stores the value of the updated number of latches in the storage 35, and transmits WRITE_RES, which is a reply command storing data representing the processing result, to the reader/writer 12. The processing result is either success or failure, and in the embodiment, it is assumed that the write processing is successful.

When all the above processing is completed, the exit management processing is ended. At the end of the exit management processing, the storage 35 of the contactless IC card 11 stores the exit flag indicating that the user has exited, the updated SV, and the number of latches. The exit flag is also stored in the form of a file at a predetermined address defined in advance.

When the exit management processing is successful and the processing ends, an exit gate of the attraction room is opened, and the user is allowed to exit.

### <5. Entrance management processing at time of entrance using advanced message>

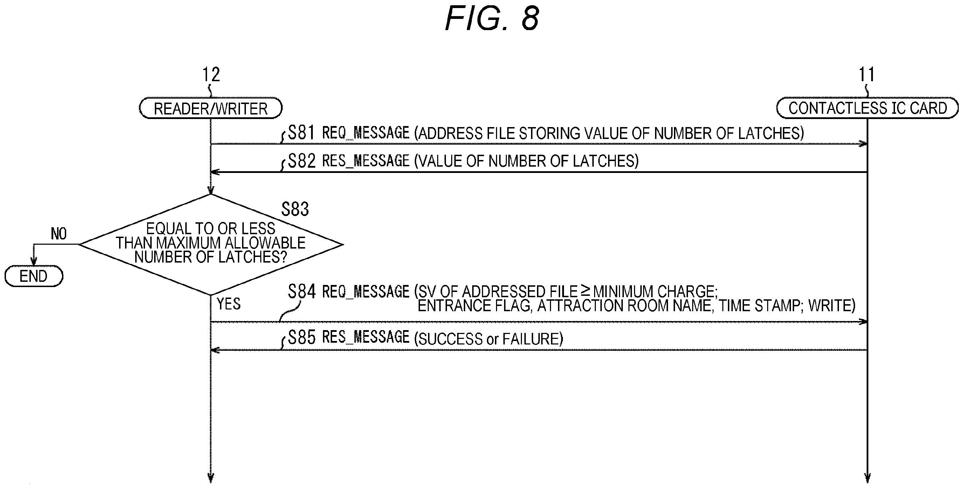

Next, with reference to the flowchart of Fig. 8, entrance management processing in the case of using advanced messages will be described. This processing, too, is started when the user brings the contactless IC card 11 close to the reader/writer 12 installed at the entrance of an attraction room, for example.

First, in step S81, the reader/writer 12 addresses the file storing the value of the number of latches and transmits REQ_MESSAGE, which is an advanced message for reading the value of the number of latches, to the contactless IC card 11.

In step S82, in response to the read message of the number of latches in step S81, the contactless IC card 11 transmits RES_MESSAGE, which is a reply message using the value of the number of latches as an argument, to the reader/writer 12.

In step S83, the reader/writer 12 determines whether the number of latches acquired from the contactless IC card 11 is equal to or less than the maximum allowable number of latches. If it is determined in step S83 that the acquired number of latches is not equal to or less than the maximum allowable number of latches (greater than maximum allowable number of latches), the reader/writer 12 does not proceed to the processing in and after step S84, and executes predetermined exception processing to end the entrance management processing.

On the other hand, if it is determined in step S83 that the acquired number of latches is equal to or less than the maximum allowable number of latches, the processing proceeds to step S84, and the reader/writer 12 transmits REQ_MESSAGE, which is an advanced message for causing predetermined processing to be executed on condition that the SV held by the contactless IC card 11 is a value equal to or more than the minimum charge, to the contactless IC card 11.

The advanced message REQ_MESSAGE transmitted from the reader/writer 12 to the contactless IC card 11 in step S84 is expressed in the following manner, and in a case where the SV of addressed file in the storage 35 is a value equal to or more than the minimum charge, the advanced message REQ_MESSAGE causes execution of processing of writing the entrance flag, a room name of the attraction room, and a time stamp.
REQ_MESSAGE (SV of addressed file ≥ minimum charge; entrance flag, attraction room name, time stamp; write)

This advanced message is in the form of REQ_MESSAGE (condition; processing target; processing content).

In step S85, the contactless IC card 11 executes processing corresponding to the advanced message in step S84, and transmits RES_MESSAGE, which is a reply message storing data representing the processing result, to the reader/writer 12. The processing result is either success or failure, and in the embodiment, it is assumed that the write processing is successful.

With the above, the entrance management processing is ended. An entrance gate of the attraction room is opened and the user is allowed to enter.

### <6. Exit management processing at time of exit using advanced message>

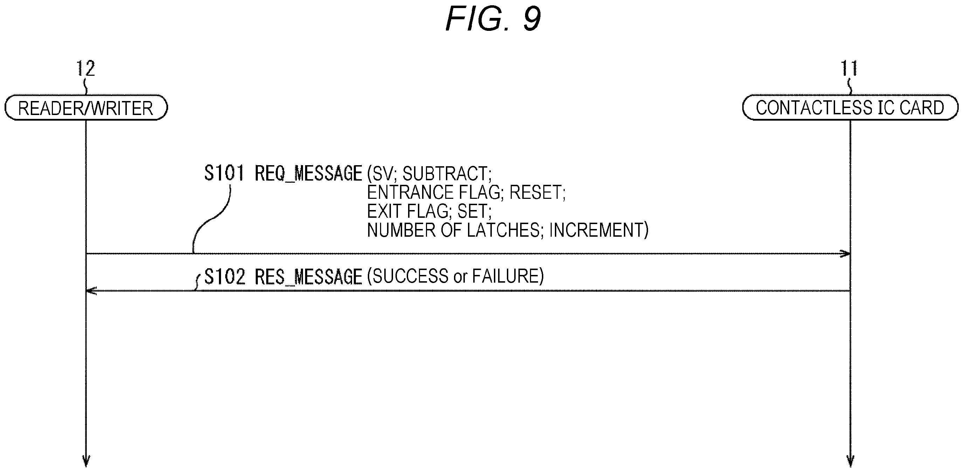

Next, with reference to the flowchart of Fig. 9, exit management processing in the case of using advanced messages will be described. This processing, too, is started when the user brings the contactless IC card 11 close to the reader/writer 12 installed at the exit of the attraction room, for example.

In step S101, the reader/writer 12 transmits an advanced message REQ_MESSAGE for causing execution of processing of the SV held by the contactless IC card 11 and the like, to the contactless IC card 11.

The advanced message REQ_MESSAGE transmitted from the reader/writer 12 to the contactless IC card 11 in step S101 is expressed in the following manner, and causes execution of processing of subtracting the SV corresponding to the usage fee from the SV in the storage 35, resetting the entrance flag, setting an exit flag, and incrementing the number of latches by one.
REQ_MESSAGE (SV; subtract; entrance flag; reset; exit flag; set; number of latches; increment)

This advanced message is in the form of REQ_MESSAGE (processing target 1; processing content 1; processing target 2; processing content 2; processing target 3; processing content 3; processing target 4; processing content 4).

In step S102, the contactless IC card 11 executes processing corresponding to the advanced message in step S101, and transmits RES_MESSAGE, which is a reply message storing data representing the processing result, to the reader/writer 12. The processing result is either success or failure, and in the embodiment, it is assumed that all specified processing is successful.

With the above, the exit management processing is ended. An exit gate of the attraction room is opened and the user is allowed to leave.

In the above processing, exception processing at the time of error occurrence and special processing such as applying a special discount rate to a specific scenario are omitted to simplify the explanation. However, such processing is also possible, as a matter of course. In a case of applying a special discount rate to a specific scenario, it is only necessary to manage past information on each latch, particularly history information on attraction room names.

### <7. Comparison of primitive command and advanced message>

Comparing Fig. 6 and Fig. 8 of the entrance management processing, in the case of using the primitive commands in Fig. 6, one round of communication in which the reader/writer 12 transmits a command and the contactless IC card 11 replies is performed five times. Meanwhile, in the case of using the advanced messages in Fig. 8, only two rounds are performed.

Comparing Fig. 7 and Fig. 9 of the exit management processing, in the case of using the primitive commands in Fig. 7, nine rounds of communication are performed, whereas in the case of using the advanced messages in Fig. 9, only one round is performed.

Accordingly, when the contactless IC card 11 and the reader/writer 12 perform contactless communication using advanced messages, the amount of information exchanged between the devices is reduced, so that the communication processing time can be further reduced. By reducing the time of the series of communication processing, it is possible to reduce the probability of occurrence of incomplete processing.

Note that in contactless communication using advanced messages, the advanced message requires more work per communication. Meanwhile, in contactless communication, in a case where a pair of command (REQ) and response (RES) is exchanged once, there is a large overhead for interpreting the command or response. Therefore, even if the time increment of the work corresponding to the advanced message is taken into consideration, reduction in the number of pairs of command (REQ) and response (RES) contributes further reduction of the total communication time.

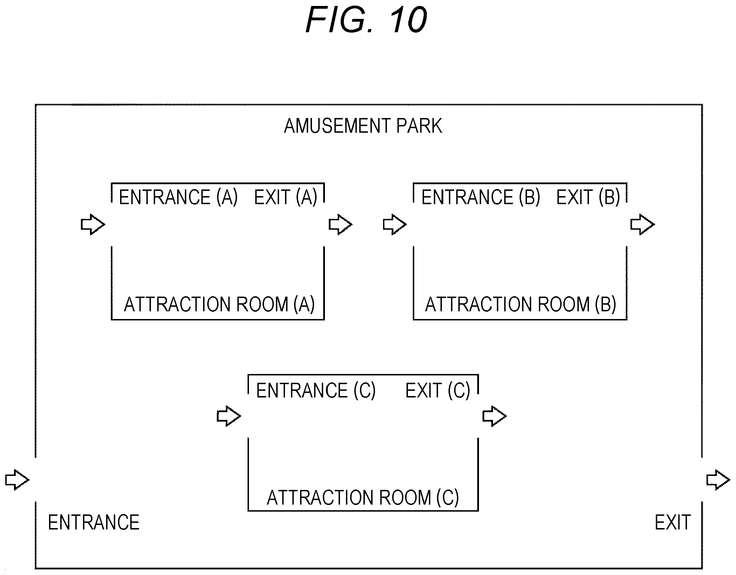

Note that as another example of the entrance/exit management service, as shown in Fig. 10, for example, in a case where all of the attraction rooms A, B, and C exist in one amusement park and entrance and exit are managed at the entrance and exit of the amusement park, if the number of times of use of an attraction room does not matter, the operation is only required to exclude the condition of the maximum allowable number of latches.

### <8. Control block diagram of contactless communication processing>

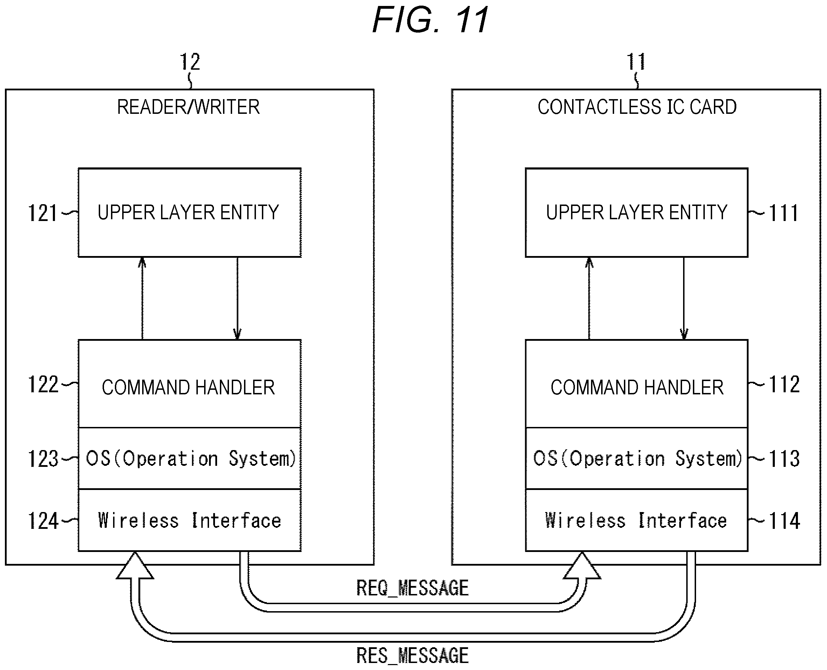

Fig. 11 is a control block diagram of the contactless IC card 11 and the reader/writer 12 in the case of performing contactless communication processing using advanced messages.

The contactless IC card 11 can be divided into an upper layer entity 111, a command handler 112, an operation system (OS) 113, and a wireless interface 114.

The upper layer entity 111 is a processing unit corresponding to an upper application program that executes a predetermined service, executes processing according to a received advanced message, determines the advanced message to be returned, and instructs the command handler 112.

The command handler 112 is a lower layer communication entity that performs contactless communication in the form of advanced messages, and generates an advanced message on the basis of an instruction from the upper layer entity 111 to transmit the advanced message to the reader/writer 12 through the OS 113 and the wireless interface 114, or receives an advanced message transmitted from the reader/writer 12 to supply the advanced message to the upper layer entity 111.

The command handler 112 is implemented as an object in object oriented programming. An object includes a collection of characteristics, and holds basic values, objects, functions, and the like. Of the characteristics of an object, a characteristic that holds a function is called the method of the object.

The OS 113 executes basic processing such as data input/output, file generation, setting and management of access rights, and the like.

The wireless interface 114 includes an LC circuit including a coiled antenna and a capacitor, and performs ASK modulation on the basis of antenna load fluctuation or demodulates a modulated wave (ASK modulated wave) received through the antenna, according to data corresponding to the transmitted and received advanced message.

The upper layer entity 111, the command handler 112, and the OS 113 correspond to the controller 33 of Fig. 1, and the wireless interface 114 corresponds to the RF communication unit 40 of Fig. 1.

The reader/writer 12 can be divided into an upper layer entity 121, a command handler 122, an operation system (OS) 123, and a wireless interface 124.

The upper layer entity 121 is a processing unit corresponding to an upper application program that executes a predetermined service, executes processing according to a received advanced message, determines the advanced message to be returned, and instructs the command handler 122.

The command handler 122 is a lower layer communication entity that performs contactless communication in the form of advanced messages, and generates an advanced message on the basis of an instruction from the upper layer entity 121 to transmit the advanced message to the contactless IC card 11 through the OS 123 and the wireless interface 124, or receives an advanced message transmitted from the contactless IC card 11 to supply the advanced message to the upper layer entity 121.

The command handler 122 is implemented as an object in object oriented programming. An object includes a collection of characteristics, and holds basic values, objects, functions, and the like. Of the characteristics of an object, a characteristic that holds a function is called the method of the object.

The OS 123 executes basic processing such as data input/output, file generation, setting and management of access rights, and the like.

The wireless interface 124 includes an LC circuit including a coiled antenna and a capacitor, and ASK modulates a carrier wave of a predetermined frequency supplied from the oscillation circuit (OSC) or demodulates a modulated wave (ASK modulated wave) received through the antenna, according to data corresponding to the transmitted and received advanced message.

The upper layer entity 121, the command handler 122, and the OS 123 correspond to the controller 63 of Fig. 1, and the wireless interface 124 corresponds to the RF communication unit 70 of Fig. 1.

In the command handler 112 of the contactless IC card 11 and the command handler 122 of the reader/writer 12, by preparing in advance objects such as REQ_MESSAGE (processing target; processing content), which is an advanced message for ordering processing, and REQ_ MESSAGE (condition; processing target; processing content), which is an advanced message for ordering processing by setting a condition, as described above as object-oriented commands, various services to be provided (use cases) such as an electronic money service, a commuter pass service for transportation, and a room entrance/exit management service can be customized easily.

### <9. Other configuration example of contactless communication system>

While the contactless communication system 1 is described as including the contactless IC card 11 and the reader/writer 12 in the above-described embodiment, the contactless communication system 1 may have any device form.

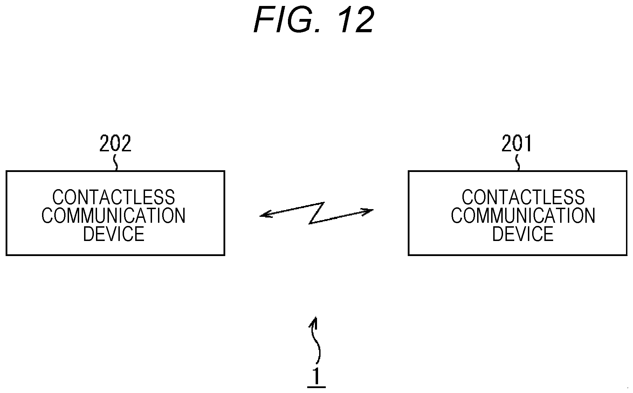

For example, as shown in Fig. 12, a contactless communication system 1 may include a contactless communication device 201 including at least the functions of the contactless IC card 11 described above and a contactless communication device 202 including at least the functions of the reader/writer 12 described above, and the contactless communication device 201 and the contactless communication device 202 may be configured to perform both the contactless communication using the above-described advanced messages and the contactless communication conforming to ISO/IEC 14443 and ISO/IEC 18092.

For example, in a case where the service provided by the contactless communication system 1 of Fig. 12 is the above-mentioned attraction room entrance/exit management service or the like, the contactless communication device 201 may include a cellular phone (smartphone) or the like including the functions of the above-mentioned contactless IC card 11 as an IC chip, and the contactless communication device 202 may include a gate device or the like installed at the entrance and exit of an attraction room, for example.

Additionally, instead of providing the function of the contactless IC card 11 in one of the contactless communication devices 201 and 202 and providing the function of the reader/writer 12 in the other, the above-described functions of the contactless IC card 11 and the reader/writer 12 may be provided in both of the contactless communication devices 201 and 202, so that the contactless communication devices 201 and 202 may operate as the contactless IC card 11 and the reader/writer 12 as needed.

As described above, according to the contactless communication system 1 to which the present technology is applied, by performing contactless communication using advanced messages, the amount of information exchanged between devices can be reduced, and the communication processing time can be further reduced. By reducing the time of the series of communication processing, it is possible to reduce the probability of occurrence of incomplete processing.

Additionally, the syntax of the advanced messages REQ_MESSAGE and RES_MESSAGE follows the sequence of parameters according to the natural language, and the operation of the communication device can be controlled on the basis of knowledge of the natural language instead of a native command that the operation system (OS) directly handles. For example, since English and Japanese have different characteristics such as different syntaxes, deciding which natural language to use for the standard syntax can provide a development environment easy for speakers of that natural language to use. Natural language support can also be performed as part of customization called localization.

While the unit that is convenient to be grouped as an advanced message differs for every use case, by preparing advanced messages with arbitrary combinations of a condition, a processing target, and a processing content according to arrangement of natural language in advance as described above, it is possible to optimize for the use case by customization.

Embodiments of the present technology are not limited to the above-described embodiments, and various modifications can be made without departing from the scope of the present technology.

For example, each device included in the contactless communication system 1 can adopt a form provided only with a part of the embodiment mentioned above.

The present technology can have a cloud computing configuration in which one function is shared and processed by multiple devices through a network.

Additionally, each step described in the above-described flowchart can be executed by one device or in a shared manner by multiple devices.

Moreover, in a case where multiple processes are included in one step, the multiple processes included in one step can be executed by being shared by multiple devices in addition to being executed by one device.

Note that in the present specification, a system means a collection of multiple components (devices, modules (parts), and the like), and it does not matter whether or not all the components are in the same case. For this reason, multiple devices housed in separate casings and connected through a network, and one device housing multiple modules in one casing are both systems.

Note that the effects described in the present specification are merely examples and are not limited, and effects other than those described in the present specification may be obtained.

Note that the present technology can also have the following configurations.
(1) A contactless communication device including
   a controller that transmits an advanced message specifying a processing target and a processing content as parameters to a communication device on another side by contactless communication, and causes the communication device to execute the processing content using data as the processing target.
(2) The contactless communication device according to (1), in which
   the controller can also transmit an advanced message also specifying a processing condition as the parameter to the communication device, and
   the advanced message also specifying the processing condition causes the communication device to execute the processing content using data as the processing target in a case where the processing condition is satisfied.
(3) The contactless communication device according to (1) or (2), in which
   the controller can also transmit an advanced message specifying plurality of processing targets and processing contents as parameters to the communication device, and
   the advanced message specifying the plurality of processing targets and processing contents causes the communication device to execute the specified processing contents for each of the plurality of processing targets.
(4) The contactless communication device according to any one of (1) to (3), in which
   the plurality of parameters specified in the advanced message is arranged in an order according to a word order of a natural language.
(5) The contactless communication device according to any one of (1) to (4), in which
   the controller receives, as a response to the advanced message, a processing result indicating whether or not an entire specified processing has succeeded.
(6) The contactless communication device according to any one of (1) to (5), in which
   contactless communication conforming to ISO/IEC 14443 or ISO/IEC 18092 can also be performed.
(7) A contactless communication device including
   a controller that receives an advanced message specifying a processing target and a processing content as parameters from a communication device on another side by contactless communication, and executes the processing content using data as the processing target.
(8) The contactless communication device according to (7), in which
   the controller can also receive an advanced message also specifying a processing condition as the parameter from the communication device, and
   in a case where the advanced message also specifying the processing condition is received, the processing content is executed using the data as the processing target in a case where the processing condition is satisfied.
(9) The contactless communication device according to (7) or (8), in which
   the controller can also receive an advanced message specifying plurality of processing targets and processing contents as parameters from the communication device, and
   in a case where the advanced message specifying the plurality of processing targets and processing contents is received, the specified processing contents are executed for each of the plurality of processing targets.
(10) The contactless communication device according to any one of (7) to (9), in which
   the plurality of parameters specified in the advanced message is arranged in an order according to a word order of a natural language.
(11) The contactless communication device according to any one of (7) to (10), in which
   the controller transmits, as a response to the received advanced message, a processing result indicating whether or not an entire specified processing has succeeded.
(12) The contactless communication device according to any one of (7) to (11), in which
   contactless communication conforming to ISO/IEC 14443 or ISO/IEC 18092 can also be performed.
(13) A communication system including a first communication device and a second communication device that perform contactless communication,
   the first communication device including
   a controller that transmits an advanced message specifying a processing target and a processing content as parameters to the second communication device, and causes the second communication device to execute the processing content using data as the processing target, and
   the second communication device including
   a controller that receives the advanced message from the first communication device, and executes the processing content using data as the processing target.

### REFERENCE SIGNS LIST

- 1: Contactless communication system
- 11: Contactless IC card
- 12: Reader/writer
- 33: Controller
- 35: Storage
- 63: Controller
- 66: Storage
- 201, 202: Contactless communication device

## Claims

1. A contactless communication device comprising
a controller that transmits an advanced message specifying a processing target and a processing content as parameters to a communication device on another side by contactless communication, and causes the communication device to execute the processing content using data as the processing target.

2. The contactless communication device according to claim 1, wherein
the controller can also transmit an advanced message also specifying a processing condition as the parameter to the communication device, and
the advanced message also specifying the processing condition causes the communication device to execute the processing content using data as the processing target in a case where the processing condition is satisfied.

3. The contactless communication device according to claim 1, wherein
the controller can also transmit an advanced message specifying a plurality of the processing targets and processing contents as parameters to the communication device, and
the advanced message specifying the plurality of processing targets and processing contents causes the communication device to execute the specified processing contents for each of the plurality of processing targets.

4. The contactless communication device according to claim 1, wherein
the plurality of parameters specified in the advanced message is arranged in an order according to a word order of a natural language.

5. The contactless communication device according to claim 1, wherein
the controller receives, as a response to the advanced message, a processing result indicating whether or not an entire specified processing has succeeded.

6. The contactless communication device according to claim 1, wherein
contactless communication conforming to ISO/IEC 14443 or ISO/IEC 18092 can also be performed.

7. A contactless communication device comprising
a controller that receives an advanced message specifying a processing target and a processing content as parameters from a communication device on another side by contactless communication, and executes the processing content using data as the processing target.

8. The contactless communication device according to claim 7, wherein
the controller can also receive an advanced message also specifying a processing condition as the parameter from the communication device, and
in a case where the advanced message also specifying the processing condition is received, the processing content is executed using the data as the processing target in a case where the processing condition is satisfied.

9. The contactless communication device according to claim 7, wherein
the controller can also receive an advanced message specifying a plurality of the processing targets and processing contents as parameters from the communication device, and
in a case where the advanced message specifying the plurality of processing targets and processing contents is received, the specified processing contents are executed for each of the plurality of processing targets.

10. The contactless communication device according to claim 7, wherein
the plurality of parameters specified in the advanced message is arranged in an order according to a word order of a natural language.

11. The contactless communication device according to claim 7, wherein
the controller transmits, as a response to the received advanced message, a processing result indicating whether or not an entire specified processing has succeeded.

12. The contactless communication device according to claim 7, wherein
contactless communication conforming to ISO/IEC 14443 or ISO/IEC 18092 can also be performed.

13. A communication system comprising a first communication device and a second communication device that perform contactless communication,
the first communication device including
a controller that transmits an advanced message specifying a processing target and a processing content as parameters to the second communication device, and causes the second communication device to execute the processing content using data as the processing target, and
the second communication device including
a controller that receives the advanced message from the first communication device, and executes the processing content using data as the processing target.
